# EUROPEAN PATENT SPECIFICATION

(11) **EP 1 320 958 B1**
(45) Date of publication and mention of the grant of the patent: **07.11.2012**
(21) Application number: 01963028.4
(22) Date of filing: 05.09.2001
(51) Int. Cl.: H04L 9/32, H04L 29/06

(54) **METHOD FOR TRANSMITTING, STORING AND ACCESSING A SECRET**
VERFAHREN ZUM ÜBERTRAGEN, SPEICHERN UND ZUGREIFEN AUF EIN GEHEIMNIS
PROCEDE DE TRANSMISSION, STOCKAGE ET D'ACCES A UN SECRET

(30) Priority: 05.09.2000 FI 20001957
(43) Date of publication of application: 25.06.2003
(73) Proprietor: Giesecke & Devrient GmbH, 81677 München (DE)
(72) Inventor: MÄTTÖ, Mikko, FIN-02150 Espoo (FI); LIUKKONEN, Jukka, FIN-00630 Helsinki (FI)
(74) Representative: Söderman, Lisbeth Karin
(86) International application number: PCT/FI2001/000771
(87) International publication number: WO 2002/021764

(56) References cited:
- WO-A2-98/49856
- WO-A2-99/56520
- US-A- 5 003 594
- US-A- 5 288 978
- US-A- 5 402 492

## Description

### TECHNICAL FIELD

The present invention is concerned with telecommunications systems. The invention is especially concerned with a method for the secure meadiation, storage and extraction of secrets on a telecommunications system.

### BACKGROUND ART

It is possible to both encrypt and sign data to be transferred In datanetworks in order to achieve confidentiality and integrity. With the signature and the encryption it is tried to achieve confidentiality, i.e. that the data remains secret and no outsiders will be able to read it. Furthermore, it aims to achieve integrity, i.e. that the data cannot be altered during the transfer without the recipient noticing it or that the data cannot be altered at all. In addition it aims to achieve indisputability i.e. that the sender cannot claim he did not send the message.

A certain method for a digital signature is, that both a public and a secret signature key have been defined for both the sender and the recipient. In a digital signature, the sender forms a hash of the message and signs the hash with his own secret signature key. The recipient of the signed message then decrypts the message using the sender's public signature key. The origin of the message can be verified in such a way that the recipient compares the hash, calculated by himself from the received decrypted message, to the hash in the message. If the hashes match, the message has been signed with the private key corresponding to the public key in question.

Analogously the encryption can be done for instance with the public key method. In the public key method both the sender and the recipient have both a public and a private key. When it is wanted to encrypt a message, the sender encrypts the message with the recipient's public key. The recipient decrypts the message with his own private key, which is only in his posession. This method is called an asymmetric method. In a symmetric encryption, the message is both encrypted and decrypted with the same key. Hence the key has to be in the possession of both the sender and the recipient. A certain example of a symmetric encryption method is the 3DES (DES, Data Encryption Standard).

At present, the use of many different systems and devices require the knowing of passwords, opening codes and other shared secrets. Furthermore, these are often predefined and the user cannot influence the form or length of them. The consequence of this is that it is difficult for a user to remember them when the degree of randomness of the secrets increases. This in turn leads to that the users write the secrets down on paper in order to remember them, which makes them eligible for theft or viewing from outsiders.

Secrets can be tried to store securely in various ways. One way is to store the secret on a computer, where the secret is protected by a password. Another way is to divide the secret with different kinds of algorithms so that you need n parts of m to form the whole secret. Thereafter, the secrets are stored in trustworthy places. The problem with the first solution is that a computer is needed for the solution, which is difficult to carry on continuously. The problem with the second solution is that the retrieving and connecting of parts of the secret takes time.

WO9956520 is mentioned as prior art. It discloses a method of storing personal codes, such as door codes, bank account codes etc.

### THE OBJECT OF THE INVENTION

The purpose of the invention is to remove said disadvantages or at least substantially alleviate them. Especially, the purpose of the invention is to present a new type of method for the safe mediation, storing and retrieving of secrets, for example passwords, using the telecommunications network.

### SUMMARY OF THE INVENTION

The present invention is concerned with the secure mediation and storage of secrets, for instance passwords of data systems, on the telecommunications system. In the invention, the sender forms two separate messages, which are sent to a recipient. The first message contains the actual secrecy data and the second data that refers to the secrecy data. By using the reference data, the secrecy data can later be retrieved.

The invention is concerned a method for the secure mediation and storage of secrets, for instance passwords of datasystems, in the telecommunications system, which comprises the sender of the message, the recipient of the message and the database attached to the recipient of the message, on which database received messages are stored and which sender and recipient have necessary attributes for the signing, encryption, checking of signatures and decryption and between which sender and recipient a telecommunications connection has been set up. With sender it is advantageously meant a mobile station and a subscriber identity module (SIM, Subscriber Identity Module) attached to the mobile station. With telecommunications connection it is advantageoulsy meant a mobile phone network, for instance a GSM-network (GSM, Global System for Mobile communications).

In the method, a first message is formed. Likewise a second message is formed. The first message is encrypted and signed. The encryption is made advantageously using the sender's own public key and the signature with the private signature key. Likewise the second message is signed advantageously with the senders private signature key. The second message can also be encrypted if necessary, in which case the message recipient's public key is used to encrypt the message. With the first and/or the second message it is advantageously meant a short message of the mobile phone network. The public key method is advantageously RSA (RSA, Rivest, Shamir, Adleman). It is also possible to use other public key methods. Such as for instance ECC (ECC, Elliptic Curve Cryptography), NTRU and XTR.

The messages are sent to the recipient. The recipient cannot decrypt the first message because it has been encrypted with the sender's own public encryption key and only the sender of the message himself can decrypt it. If the second message furthermore was encypted, the recipient decrypts the message and checks the digital signature concerned with the message.

In accordance with the invention, the contents of the first message is set to be the secrecy data. Furthermore, the contents of the second message is set to be data that individualizes said secrecy data. The contents of the second message is attached to refer to the received, signed and encrypted first message. The signed and encrypted first message as well as the second message are stored in a database for later extraction.

The invention is also concerned with a method for the safe extraction of secrets, for instance the passwords of datasystems, in the telecommunications system, which comprises of the sender of the message, the recipient of the message and the database attached to the recipient, in which database earlier received messages have been stored and which sender and recipient comprise necessary attributes for the signing, encryption, checking of signature and for the decryption of a message and between which sender and recipient a telecommunications connection has been set up. With sender it is advantageously meant a mobile station and the subscriber identity module attached to it. With telecommunications connection it is advantageously meant a mobile phone network, for instance a GSM-network.

In the method a message is formed, which is signed. Advantageously, the message is also encrypted with the recipient's public encryption key. With message it is advantageously meant a short message of the mobile phone network. The public key method is advantageously RSA. It is also possible to use other public key methods. For instance ECC, NTRU and XTR. The signed and possibly encrypted message is sent to the recipient, which decrypts the received message and checks the digital signature concerned with the message.

In accordance with the invention the contents of said message is set to be data that individualizes certain secrecy data. The recipient of the message checks from the database if secrecy data, which is concerned with the received individualizing data, has been stored for the sender of said message. If the secrecy data corresponding to the individualizing data is found, the secrecy data indicated by the individualizing data is sent back to the sender. The secrecy data is advantageously sent in a mobile phone network short message. In the extraction of secrecy data, heuristics can be used, if the received individualizing data is only a part of or resembles the original individualizing data stored earlier.

Because of the presented invention the secrecy data stored by the recipient stays absolutely secret, because it has been encrypted with the sender's own public encryption key. Not even the storer of the encrypted secret data knows the contents of the secret. Furthermore, no outsider can alter the stored secret without the sender of the secret noticing it. This because the sender has signed the secret before its storage in the recipient's database.

In the presented invention the secrets to be stored can be arbitrarily many. The presented method does not in any way restrict the amount of secrets to be stored.

### LIST OF DRAWINGS

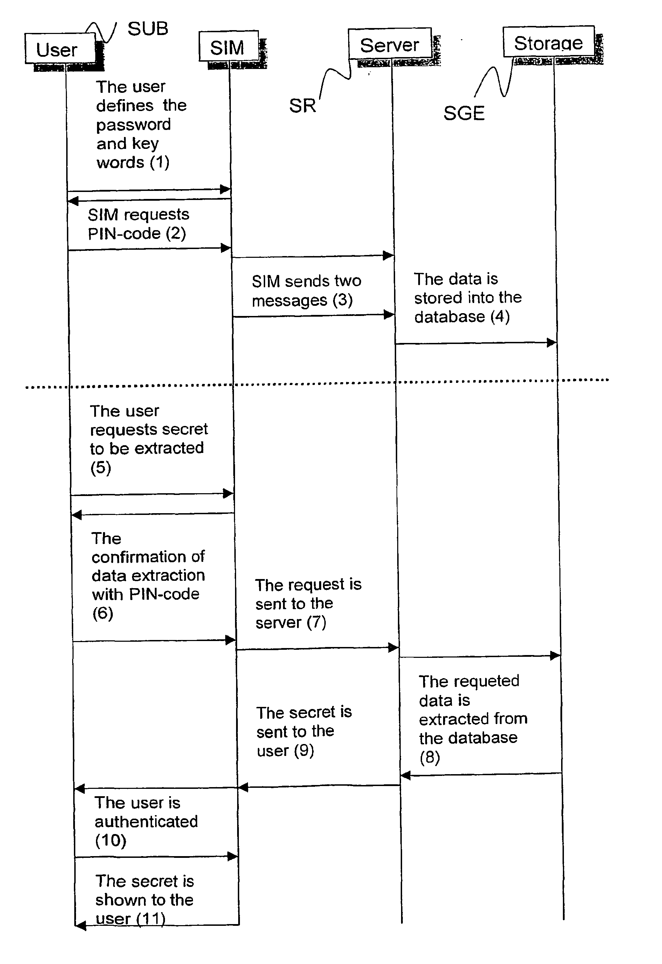

In the following the invention is decribed in detail using embodiment examples, where
figure 1 presents a certain appplication of the invention.

### DETAILED DESCRIPTION OF THE INVENTION

The example of with figure 1 comprises a user SUB, a subscriber identity module SIM, a server SR and a database SGE attached to the server SR. The subscriber identity module SIM is attached to a mobile station, which is in the possesion of the user SUB. In this example the method of the invention is used to store and extract a password.

In accordance with arrow 1, the user SUB defines a password and individualizing data reffering to the password - a key word or several key words. The mobile station in the possesion of the user SUB comprises the necessary attributes for the signing, encryption, checking of signature and decryption of the data. The subscriber identity module SIM requests the PIN-code (PIN, Personal Identification Number) as a confirmation for the carrying out of the signing and encryption procedure, arrow 2. The defined password is signed with the user's SUB private signature key and encrypted with the user's SUB own public encryption key. The public key method is advantageously RSA, but it is also possible to use other public key methods. For instance ECC, NTRU and XTR. The password is encrypted with the user's SUB own public key so that no one else than the user himself can decrypt the encryption. The key word or key words are signed with the user's private signature key. In addition, the message, which contains the key word or key words can be encrypted. The recipient's public key is advantageously used in the encryption. In this example, both the first and the second message have been signed and encrypted with the proper keys.

The formed signed and encrypted messages are advantageously sent to the recipient in a mobile phone network short message, arrow 3. The mobile phone network is advantageously a GSM-network. The short messages are sent to the server SR, where means for receiving and sending short messages have been set up. With server SR is meant any device or computer, which comprises necessary attributes for the signing, encryption, checking of signature and decryption of encryption and other functions demanded by the invention. In accordance with arrow 4 data received by the server SR is stored in the database SGE.

The line of dashes underneith arrow 4 means that the timeline between arrows 4 and 5 has not been predefined. In accordance with arrow 5 the user SUB demands certain secrecy to be followed for example in a situation where the user has forgotten a password required by a datasystem, but still remembers the key word or key words, where the encrypted secrecy data has been attached in the database SGE. The user SUB feeds the necessary key word or words into his mobile station. The subscriber identity module SIM requests from the user SUB the PIN-code for the extraction a secret, arrow 6.

From the key word or key words fed by the user SUB a message is formed, which the subscriber identity module digitally signs and advantageously also encrypts with the recipient's (server SR) public encryption key. The signed and advantageously encrypted message is sent to the server SR, arrow 7. The server SR extracts the requested data from the database SGE, arrow 8. In some cases the user might not necessarily remember the key word exactly. In this case the user sends the remembered part to the server SR and the server SR extracts the secrecy data stored in the database SGE for example using a heuristic determination. With this it is meant that it is checked if the received key word data is a part of or resembles an earlier key word stored in the database SGE.

The server SR sends the stored secret to the subscriber identity module SIM, arrow 9. The secret to be sent does not need to be encrypted again because it has already been encrypted using the user's SUB own public encyption key. In accordance with arrow 10 the subscriber identity module SIM requests from the user the PIN-code for the decryption of the secrecy data (password). The subscriber identity module SIM decrypts the encryption and checks the signature. If the decryption of the secret and the checking of the signature is succesful, the secrecy data (password) is shown to the user SUB, arrow 11.

Above the invention was explained with the help of a mobile phone and a subscriber identity module. It should be noted, that the sender's terminal can aslo be any other device from which there is a connection to a telecommunication network and which has the necessary attributes for the signing, encrypting, checking of signatures and decrypting of encryption.

The invention is not restricted to concern only the application examples presented above, but various other variations are possible whilst staying within the inventive idea defined by the patent claims.

## Claims

1. A method for the secure mediation and storing of secrets, for example passwords of datasystems, in a telecommunications system, which comprises a sender of a message, a recipient of the message and a database attached to the recipient, in which database received messages are stored and which sender and recipient of the message comprise necessary attributes for the signing, encrypting, checking of signatures and decryption of encrypted messages and between which sender and recipient a telecommunications connection has been set up, which method comprises the following steps:
forming a first message by the sender;
forming a second message by the sender;
signing and encrypting the first message by the sender;
signing the second message by the sender;
sending the signed and encrypted first message by the sender to the recipient;
sending the signed second message to the recipient;
checking the digital signature concerning the second message by the recipient;
**charachterized** in that
- the step of forming a first message comprises the step of setting the secrets as the contents of said first message
- the step of forming a second message comprises the step of setting individualizing data, which refers to said secrets as the contents of said second message;
- the step of sending the signed second message comprises the step of attaching said second message's contents to refer to said signed and encrypted first message; and
- the step of checking the digital signature further comprises the step of storing said signed and encrypted first message and of storing of said second message into the database for later extraction.

2. A method in accordance with patent claim 1, **characterized by**, the encryption of the first message with the sender's own public key.

3. A method in accordance with patent claim 1 or 2, **characterized by**, the encryption of the second message with the recipient's public key; and by
decryption of the second message before the checking of the digital signature.

4. A method in accordance with any of the earlier patent claims 1, 2 or 3, **ch aracerized** in, that the public key method is RSA, ECC, NTRU or XTR.

5. A method in accordance with any of the earlier patent claims 1, 2, 3 or 4, **c haracterized** in, that with sender it is meant a mobile station and the subscriber identity module attached to it.

6. A method in accordance with any of the earlier patent claims 1, 2, 3, 4 or 5, **characterized in, that** the formed first and/or second message is a short message.

7. A method in accordance with any of the earlier patent claims 1, 2, 3, 4, 5 or 6, **characterized in, that** the telecommunications connection has been set up using a mobile phone network.

8. A method for the secure extraction of secrets, for instance passwords of datasystems, in a telecommunications system, which comprises a sender of a message, a recipient of the message and a database attached to the recipient, in which database earlier received messages have been stored and which sender and recipient of the message comprise attributes necessary for the signing, encryption, checking of signature and the decryption of messages and where a telecommunications connection has been set up between the sender and the recipient, which method comprises of the following steps:
forming a message by the sender;
signing said message by the sender;
sending the signed message by the sender to the recipient;
checking the digital signature concerning the message by the recipient;
**characterized in, that**
- said step of forming a message comprises individualizing data corresponding to the secrets as the contents of said message;
- the recipient checks if encrypted secrets have been stored for the sender of said message into the recipient's database, said encrypted secrets being concerned with the received individualizing data;
- and if encrypted secrets corresponding to the individualizing data are found, the recipient sends back the encrypted secrets indicated by the individualizing data to the sender.

9. A method in accordance with patent claim 8, **characterized by**, the encryption of the message with the recipient's public key; and
by the decryption of the message before the checking of the digital signature.

10. A method in accordance with patent claim 8 or 9, **characterized by**, the use of heurestics when searching previously stored secrecy data by using individualizing data.

11. A method in accordance with any of the earlier patent claims 8, 9 or 10, **c haracterized** in, that the public key method is RSA, ECC, NTRU or XTR.

12. A method in accordance with any of the earlier patent claims 8, 9, 10 or 11, **characterized in, that** with sender it is meant a mobile station and the subscriber identity module attached to it.

13. A method in accordance with any of the earlier patent claims 8, 9, 10, 11 or 12, **characterized in, that** the formed message is a short message.

14. A method in accordance with any of the earlier patent claims 8, 9, 10, 11, 12 or 13, **characterized by**, the sending of the secrecy data indicated by the individualizing data in a short message.

15. A method in accordance with any of the earlier patent claims 8, 9, 10, 11, 12, 13 or 14 **characterized in, that** the telecommunications connection between the sender and the recipient has been set up by using a mobile phone network.

## Patentansprüche

1. Verfahren zum sicheren Übertragen und Speichern von Geheimnissen, zum Beispiel Passwörtern von Datensystemen, in einem Telekommunikationssystem, das einen Sender einer Nachricht, einen Empfänger der Nachricht und eine an den Empfänger angeschlossene Datenbank aufweist, wobei in der Datenbank empfangene Nachrichten gespeichert werden, und wobei der Sender und der Empfänger der Nachricht notwendige Attribute zur Signierung, Verschlüsselung, Überprüfung von Signaturen und Entschlüsselung von verschlüsselten Nachrichten aufweisen, und wobei zwischen dem Sender und dem Empfänger eine Telekommunikationsverbindung erstellt wurde, wobei das Verfahren die folgenden Schritte aufweist:
Erstellen einer ersten Nachricht durch den Sender;
Erstellen einer zweiten Nachricht durch den Sender;
Signieren und Verschlüsseln der ersten Nachricht durch den Sender;
Signieren der zweiten Nachricht durch den Sender;
Senden der signierten und verschlüsselten ersten Nachricht durch den Sender an den Empfänger;
Senden der signierten zweiten Nachricht an den Empfänger;
Überprüfen der digitalen Signatur betreffend die zweite Nachricht durch den Empfänger;
**dadurch gekennzeichnet, dass**
- der Schritt des Erstellens einer ersten Nachricht den Schritt des Einstellen des Geheimnisses als Inhalt der ersten Nachricht aufweist,
- der Schritt des Erstellens einer zweiten Nachricht den Schritt des Einstellens von Individualisierungsdaten aufweist, die sich auf die Geheimnisse als Inhalt der zweiten Nachricht beziehen;
- der Schritt des Sendens der signierten zweiten Nachricht den Schritt des Anhängens des Inhalts der zweiten Nachricht, der sich auf die signierte und verschlüsselte erste Nachricht bezieht, aufweist; und
- der Schritt des Überprüfens der digitalen Signatur ferner den Schritt des Speicherns der signierten und verschlüsselten ersten Nachricht und des Speicherns der zweiten Nachricht in der Datenbank zum späteren Auskoppeln aufweist.

2. Verfahren nach Patentanspruch 1, **gekennzeichnet durch** die Verschlüsselung der ersten Nachricht mit dem sendereigenen öffentlichen Schlüssel.

3. Verfahren nach Patentanspruch 1 oder 2, **gekennzeichnet durch** die Verschlüsselung der zweiten Nachricht mit dem empfängereigenen öffentlichen Schlüssel; und **durch**
das Entschlüsseln der zweiten Nachricht vor Überprüfung der digitalen Signatur.

4. Verfahren nach einem der vorhergehenden Patentansprüche 1, 2 oder 3, **dadurch gekennzeichnet, dass** das Verfahren des öffentlichen Schlüssels ein RSA-, ECC-, NTRU- oder XTR-Verfahren ist.

5. Verfahren nach einem der vorhergehenden Patentansprüche 1, 2, 3 oder 4, **dadurch gekennzeichnet, dass** unter dem Sender eine Mobilstation und das daran angeschlossene Teilnehmer-Identifizierungs-Modul zu verstehen ist.

6. Verfahren nach einem der vorhergehenden Patentansprüche 1, 2, 3, 4 oder 5, **dadurch gekennzeichnet, dass** die erstellte erste und/oder zweite Nachricht eine Kurznachricht ist.

7. Verfahren nach einem der vorhergehenden Patentansprüche 1, 2, 3, 4, 5 oder 6, **dadurch gekennzeichnet, dass** die Telekommunikationsverbindung unter Verwendung eines Mobilfunknetzes erstellt wurde.

8. Verfahren zum sicheren Abrufen von Geheimnissen, zum Beispiel Passwörtern von Datensystemen, in einem Telekommunikationssystem, das einen Sender einer Nachricht, einen Empfänger der Nachricht und eine an den Empfänger angeschlossene Datenbank aufweist, wobei in der Datenbank früher empfangene Nachrichten gespeichert wurden und wobei der Sender und der Empfänger der Nachricht für das Signieren, die Verschlüsselung, das Überprüfen der Signatur und die Entschlüsselung der Nachrichten notwendige Attribute aufweist, und wobei eine Telekommunikationsverbindung zwischen dem Sender und dem Empfänger hergestellt wurde, wobei das Verfahren die folgenden Schritte aufweist:
Erstellen einer Nachricht durch den Sender;
Signieren der Nachricht durch den Sender;
Senden der signierten Nachricht durch den Sender an den Empfänger;
Überprüfen der die Nachricht betreffenden digitalen Signatur durch den Empfänger;
**dadurch gekennzeichnet, dass**
- der Schritt des Erstellens einer Nachricht das Individualisieren von Daten aufweist, die den Geheimnissen als Inhalt der Nachricht entsprechen;
- der Empfänger überprüft, ob verschlüsselte Geheimnisse für den Sender der Nachricht in der Datenbank des Empfängers gespeichert wurden, wobei die verschlüsselten Geheimnisse die empfangenen Individualisierungsdaten betreffen;
- und wenn verschlüsselte Geheimnisse, die den Individualisierungsdaten entsprechen, gefunden werden, der Empfänger die verschlüsselten Geheimnisse, die von den Individualisierungsdaten angezeigt werden, an den Sender zurück sendet.

9. Verfahren nach Patentanspruch 8, **gekennzeichnet durch** die Verschlüsselung der Nachricht mit dem empfängereigenen öffentlichen Schlüssel; und
**durch** das Entschlüsseln der Nachricht vor Überprüfung der digitalen Signatur.

10. Verfahren nach Patentanspruch 8 oder 9, **gekennzeichnet durch** die
Verwendung von Heuristiken beim Suchen nach zuvor gespeicherten Geheimhaltungsdaten unter Verwendung von Individualisierungsdaten.

11. Verfahren nach einem der vorhergehenden Patentansprüche 8, 9 oder 10, **dadurch gekennzeichnet, dass** das Verfahren des öffentlichen Schlüssels ein RSA-, ECC-, NTRU- oder XTR-Verfahren ist.

12. Verfahren nach einem der vorhergehenden Patentansprüche 8, 9, 10 oder 11, **dadurch gekennzeichnet, dass** unter dem Sender eine Mobilstation und das daran angeschlossene Teilnehmer-Identifizierungs-Modul zu verstehen ist.

13. Verfahren nach einem der vorhergehenden Patentansprüche 8, 9, 10, 11 oder 12, **dadurch gekennzeichnet, dass** die erstellte Nachricht eine Kurznachricht ist.

14. Verfahren nach einem der vorhergehenden Patentansprüche 8, 9, 10, 11, 12 oder 13, **gekennzeichnet durch** das Senden der Geheimhaltungsdaten, die **durch** die Individualisierungsdaten in einer Kurznachricht angezeigt sind.

15. Verfahren nach einem der vorhergehenden Patentansprüche 8, 9, 10, 11, 12, 13 oder 14, **dadurch gekennzeichnet, dass** die Telekommunikationsverbindung zwischen dem Sender und dem Empfänger unter Verwendung eines Mobilfunknetzes erstellt wurde.

## Revendications

1. Procédé de transmission et de stockage sécurisés de secrets, par exemple de mots de passe de systèmes de données, dans un système de télécommunication, lequel comprend un émetteur de message, un destinataire de message et une base de données attachée au destinataire, dans laquelle base de données les messages reçus sont stockés et lesquels émetteur et destinataire du message comprennent des attributs nécessaire pour la signature, le cryptage, la vérification de signatures et le décryptage des messages cryptés et une connexion de télécommunication ayant été établie entre lesdits émetteur et destinataire, lequel procédé comprenant les phases suivantes :
formation d'un premier message par l'émetteur ;
formation d'un second message par l'émetteur ;
signature et cryptage du premier message par l'émetteur ;
signature du second message par l'émetteur ;
envoi du premier message signé et crypté par l'émetteur au destinataire;
envoi du second premier message signé au destinataire;
vérification de la signature numérique concernant le second message
par le destinataire ;
**caractérisé en ce que**
- la phase de formation d'un premier message comprend la phase de consignation des secrets en tant que contenu dudit premier message
- la phase de formation d'un second message comprend la phase de consignation des données d'individualisation, qui se rapportent auxdits secrets en tant que contenu dudit message ;
- la phase d'envoi du second message signé comprend la phase pour joindre le contenu dudit second message pour référer audit premier message signé et crypté ; et
- la phase de vérification de la signature numérique comprend encore la phase de stockage dudit premier message signé et crypté et de stockage dudit second message dans la base de données pour une extraction ultérieure.

2. Procédé selon la revendication 1, **caractérisé en ce que** ledit premier message est crypté avec la clef publique propre de l'émetteur.

3. Procédé selon la revendication 1 ou 2, **caractérisé en ce que** le second message est crypté avec la clef publique du destinataire, et **en ce que**
le second message est décrypté avant la vérification de la signature numérique.

4. Procédé selon l'une quelconque des revendications précédentes 1, 2 ou 3, **caractérisé en ce que** le procédé de la clef publique est RSA, ECC, NTRU ou XTR.

5. Procédé selon l'une quelconque des revendications précédentes 1, 2, 3 ou 4, **caractérisé en ce que** par l'émetteur on comprend une station mobile et le module d'identité de l'abonné attaché à celle-ci.

6. Procédé selon l'une quelconque des revendications précédentes 1, 2, 3, 4 ou 5, **caractérisé en ce que** le premier et/ou second message formé est un minimessage.

7. Procédé selon l'une quelconque des revendications précédentes 1, 2, 3, 4, 5 ou 6, **caractérisé en ce que** la connexion de télécommunication a été établie en utilisant un réseau de téléphone mobile.

8. Procédé d'extraction sécurisé de secrets, par exemple de mots de passe de systèmes des données, dans un système de télécommunications, lequel comprend un émetteur de message, un destinataire de message et une base de données attachée au destinataire, dans laquelle base de données les messages antérieurs reçus ont été stockés et dans laquelle l'émetteur et le destinataire du message contiennent des attributs nécessaires pour la signature, le cryptage, la vérification de signature et le décryptage des messages et où une connexion de télécommunication a été créée entre l'émetteur et le destinataire, lequel procédé comprenant les phases suivantes :
formation d'un premier message par l'émetteur ;
signature dudit message par l'émetteur ;
envoi du message signé par l'émetteur au destinataire;
vérification de la signature numérique concernant le message par le destinataire ;
**caractérisé en ce que**
- ladite phase de formation d'un message comprend les donnés d'individualisation correspondant aux secrets en tant que contenu dudit message ;
- le destinataire vérifie si les secrets cryptés ont été stockés par l'émetteur dudit message dans la base de données du destinataire, lesdits secrets cryptés concernant les données d'individualisation reçus ;
- et si des secrets cryptés correspondant aux données d'individualisation sont trouvés, le destinataire renvoie les secrets cryptés indiqués par les données d'individualisation à l'émetteur.

9. Procédé selon la revendication 8, **caractérisé en ce que** le message est crypté avec la clef publique du destinataire ; et
que le message est décrypté avant la vérification de la signature numérique.

10. Procédé selon la revendication 8 ou 9, **caractérisé en ce que** l'on utilise
des heuristiques pour chercher des données de secret stockées antérieurement en utilisant les données d'individualisation.

11. Procédé selon l'une quelconque des revendications précédentes 8, 9 ou 10, **caractérisé en ce que** le procédé de clef publique est RSA, ECC, NTRU ou XTR.

12. Procédé selon l'une quelconque des revendications précédentes 8, 9, 10 ou 11, **caractérisé en ce que** par l'émetteur on comprend une station mobile et le module d'identité de l'abonné attaché à celle-ci.

13. Procédé selon l'une quelconque des revendications précédentes 8, 9, 10, 11 ou 12, **caractérisé en ce que** le message formé est un minimessage.

14. Procédé selon l'une quelconque des revendications précédentes 8, 9, 10, 11, 12 ou 13, **caractérisé en ce que** les données de secret indiquées par les données d'individualisation sont envoyées dans un minimessage.

15. Procédé selon l'une quelconque des revendications précédentes 8, 9, 10, 11, 12, 13 ou 14, **caractérisé en ce que** la connexion de télécommunication entre l'émetteur et le destinataire a été établie en utilisant un réseau de téléphone mobile.
